# EUROPÄISCHE PATENTSCHRIFT

(11) **EP 2 095 864 B1**
(45) Veröffentlichungstag und Bekanntmachung des Hinweises auf die Patenterteilung: **03.08.2011**
(21) Anmeldenummer: 08018033.4
(22) Anmeldetag: 15.10.2008
(51) Int. Cl.: B01D 53/94, B01J 37/02, F01N 3/035

(54) **Vorrichtung zur Verminderung von Dibenzo-Dioxin- und Dibenzo-Furan-Emissionen aus übergangsmetallhaltigen Katalysatoren**
Device for reducing dibenzo-dioxin and dibenzo-furan emissions from catalytic converters containing transition metals
Dispositif de réduction d'émissions de dioxine de Dibenzo et Dibenzo-Furan de catalyseurs contenant du métal transitoire

(30) Priorität: 12.02.2008 DE 102008008786
(43) Veröffentlichungstag der Anmeldung: 02.09.2009
(73) Patentinhaber: MAN Truck & Bus AG, 80995 München (DE)
(72) Erfinder: Döring, Andreas, 80339 München (DE)

(56) Entgegenhaltungen:
- EP-A- 0 393 905
- EP-A- 1 602 403
- WO-A-2006/023932
- DE-A1- 19 651 691
- DE-A1-102006 031 650
- DE-A1-102006 031 661
- JP-A- 11 010 003
- US-A1- 2004 235 654

## Beschreibung

Die Erfindung richtet sich auf eine Vorrichtung zur Verminderung der Bildung von polychlorierten Di-benzo-Dioxinen und polychlorierten Dibenzo-Furanen an wenigstens einem übergangsmetallhaltigen Katalysator, der in der Abgasableitung einer Brennkraftmaschine verbaut ist und auf ein Verfahren zur Herstellung einer solchen Vorrichtung.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NOₓ -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂ +6H₂O (1)

Wird den SCR-Katalysatoren ein platinhaltiger NO-Oxidationskatalysator zur Bildung von NO₂ vorgeschaltet

2NO+O₂ ⇔ 2NO₂ (2)

so kann die SCR-Reaktion erheblich beschleunigt und die Tieftemperaturaktivität merklich angehoben werden.

NO+2NH₃+NO₂ ⇒ 2N₂+3H₂O (3)

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um hier Abhilfe zu schaffen, wird häufig ein, dem SCR-Katalysator nachgeordneter, Ammoniak-Sperrkatalysator eingesetzt, der überschüssigen Ammoniak zu Stickstoff und Wasserdampf umsetzt.

Zur Minimierung der Feinstoffpartikel werden sowohl im Kraftwerksbereich als auch bei Fahrzeugen entweder sogenannte Partikelabscheider oder Partikelfilter eingesetzt.

Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist, während bei Partikelfiltem der Durchmesser der Filterkanäle im Bereich der Durchmesser der Partikel liegt.

Infolge dieses Unterschiedes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen. Die beiden vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes nach der Beziehung (2) zu Stickstoffdioxid oxidiert. Dabei ist zu beachten, dass das Gleichgewicht der obigen Reaktion bei hohen Temperaturen auf der Seite von NO liegt. Dies hat zur Folge, dass die erzielbaren NO₂-Anteile bei hohen Temperaturen auf Grund dieser thermodynamischen Begrenzung limitiert sind.

Dieses NO₂ setzt sich wiederum im Partikelabscheider, bzw. Partikelfilter mit den Kohlenstoffpartikeln zu CO, CO₂, N₂ und NO um.
Mit Hilfe des starken Oxidationsmittels NO₂ erfolgt eine kontinuierliche Entfernung der angelagerten Feinstoffpartikel, Regenerationszyklen, wie sie aufwändig bei anderen Anordnungen durchgeführt werden müssen, entfallen dadurch. Man spricht daher von einer "passiven" Regeneration.

2 NO₂ + C ⇒ 2 NO + CO₂ (4)

2NO₂ + C ⇒ 2NO+CO (5)

2C + 2NO₂ ⇒ N₂ + 2CO₂ (6)

Gelingt keine vollständige Oxidation des im Partikelfilter eingelagerten Kohlenstoffs mit Hilfe von NO₂, so steigt der Kohlenstoffanteil und damit der Abgasgegendruck stetig an.

Um dies zu vermeiden, werden aktuell die Partikelfilter vermehrt mit einer katalytischen Beschichtung zur Oxidation von NO versehen. Dabei handelt es sich meist, wie bereits oben beschrieben, um platinhaltige Katalysatoren. Der Nachteil dieses Verfahrens besteht allerdings darin, dass das am Partikelfilter gebildete NO₂ nur zur Oxidation von Partikeln dienen kann, die stromab der katalytisch aktiven Schicht zur NO-Oxidation abgeschieden wurden, also innerhalb des Filtermediums. Bildet sich dagegen auf der Filteroberfläche und damit auf der katalytisch aktiven Schicht eine Schicht aus abgeschiedenen Partikeln, ein sogenannter Filterkuchen, aus, so liegt der NO-Oxidationskatalysator stromab des Filterkuchens, so dass die dort abgeschiedenen Russpartikel nicht mit Hilfe von NO₂ aus dem auf dem Partikelfilter aufgebrachten NO-Oxidationskatalysator oxidiert werden können.
Hinzu kommt noch, dass genau genommen, nur die auf der Rohgasseite aufgebrachte Katalysatorschicht zur Performance des Systems beiträgt, da das auf der Reingasseite katalytisch gebildete NO₂ nicht mehr in Kontakt mit dem auf der Rohgasseite und innerhalb des Filtermaterials abgeschiedenen Ruß kommen kann.

Ein weiteres Problem der Beschichtung des Partikelfilters ist, dass die geometrischen Oberflächen des Filters deutlich geringer als die der üblicherweise eingesetzten Katalysatorsubstrate sind. Der Grund hierfür liegt darin, dass die Filter relativ große freie Querschnitte und damit freies Volumen auf der Rohgasseite benötigen, um Ruß und Motorölasche einzulagern. Werden keramische Filtersubstrate eingesetzt, wird dies durch eine geringe Zelligkeit von 50cpsi-200cpsi realisiert. Demgegenüber werden reine Katalysatoren üblicherweise mit Zelldichten von 400cpsi-900cpsi ausgeführt. Durch die Anhebung von 50cpsi auf 900cpsi ergibt sich eine Erhöhung der geometrischen Oberfläche von 1m²/l auf 4m²/l, wodurch erhebliche Umsatzsteigerung an den Katalysatoren möglich werden.

Aus diesen Gründen kann, trotz der katalytischen Beschichtung des Filters, nicht auf einen NO-Oxidationskatalysator vor dem Partikelfilter verzichtet werden, so dass sich ein relativ großes Bauvolumen ergibt. Dies ist selbst dann der Fall, wenn die NO-Oxidationskatalysatoren und die Partikelfilter eine bauliche Einheit bilden, indem der Eintrittsbereich des Partikelfilters als NO-Oxidationskatalysator ausgeführt ist (DE10327030A1).

Obwohl durch diese Maßnahmen eine Rußoxidation noch bis zu Temperaturen von 250°C möglich ist, gibt es dennoch Anwendungsfälle, in denen selbst diese Abgastemperaturen nicht erreicht werden und somit keine sichere Funktion des Partikelfilters sichergestellt werden kann. Dies tritt üblicherweise bei schwachbelasteten und in Fahrzeugen verbauen Motoren auf, beispielsweise bei Personenkraftwagen, Linienbussen oder Müllfahrzeugen, die noch zusätzlich hohe Leerlaufanteile aufweisen.

Daher wird, speziell in solchen Fällen, eine zweite Möglichkeit der Partikelfilterregeneration angewendet: Sie besteht darin, die Abgastemperatur aktiv anzuheben. Dies gelingt üblicherweise durch die Zugabe von Kohlenwasserstoffen stromauf von Oxidationskatalysatoren. Durch die exotherme Oxidation der Kohlenwasserstoffe an den Katalysatoren kommt es zu einem deutlichen Temperaturanstieg.

Gelingt dadurch eine Temperaturanhebung auf über 600°C, kommt es zu einer Oxidation des Kohlenstoffs mit Hilfe von Sauerstoff.

C + O₂ ⇒ CO₂ (7)

Allerdings besteht bei dieser sogenannten "aktiven" Filterregeneration die Gefahr, dass es durch das Abbrennen des Rußes zu einem starken Temperaturanstieg auf bis zu 1000°C und damit meist zur Schädigung des Partikelfilters und/oder nachgeschalteter Katalysatoren kommt.
Da die Temperaturerhöhung für mehrere Minuten aufrechterhalten werden muss, um eine quantitative Oxidation der Russpartikel sicherzustellen, ist der Bedarf an Kohlenwasserstoffen nicht unerheblich und verschlechtert, da üblicherweise der Kraftstoff der Brennkraftmaschine als Kohlenwasserstoffquelle verwendet wird, deren Wirkungsgrad.

Die Zugabe der Kohlenwasserstoffe kann durch eine, im Abgastrakt angebrachte, separate Einspritzdüse erfolgen. Eine weitere Möglichkeit besteht darin, über eine späte Nacheinspritzung des Kraftstoffs in den Brennraum, hohe Kohlenwasserstoffemissionen zu generieren.

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feinstoffpartikelemission erforderlich.

Eine Lösung besteht darin, den Partikelfilter mit SCR-aktivem Material zu beschichten (JP 2004-376102). Hierbei gestaltet sich allerdings der Einsatz von V₂O₅ als SCR-Aktivkomponente als schwierig. Der Grund hierfür liegt in der geringen thermischen Stabilität dieser Katalysatoren. So kommt es bei Abgastemperatur von über 650°C zur Sublimation von V₂O₅. Da diese Temperaturen, wie bereits oben beschrieben, an Partikelfiltern durchaus auftreten können, werden für diese Hochtemperaturanwendungen V₂O₅-freie, übergangsmetallhaltige, insbesondere eisen-, kobalt- oder kupferhaltige, Katalysatoren eingesetzt. Als besonders vorteilhaft hat es sich in diesem Zusammenhang erwiesen, diese Übergangsmetalle durch Ionenaustauch in Zeolithe zu integrieren (DE 3 912 596 C2). Auf Grund der sehr großen Oberfläche der Zeolithe gelingt dadurch eine erhebliche Vergrößerung der aktiven Oberfläche und damit eine deutliche Steigerung der erreichbaren Umsätze.

Der Nachteil dieser übergangsmetallhaltigen Katalysatoren liegt allerdings darin, dass sie unter Anwesenheit von Chlorid und Kohlenwasserstoffen im Temperaturbereich zwischen 200-400°C hochtoxische polychlorierte Dibenzo-Dioxine (PCDD) und polychlorierte Dibenzo-Furane (PCDF) bilden. Im Fahrzeug gelangt das für die Dioxinbildung notwendige Chlorid z. B. über Biokraftstoffe, das Motorenöl oder die Ansaugluft (Salzstreuung im Winter, Fahren in Küstennähe) in das Abgas und damit an die Katalysatoren. Die für die Bildung von PCDD und PCDF notwendigen Kohlenwasserstoffe sind auf Grund der unvollständigen Verbrennung des Kraftstoffs ohnehin im Abgas enthalten.

Der Erfindung liegt die Aufgabe zugrunde, die Bildung dieser Schadstoffe zu verhindern bzw. zu reduzieren.

Die erfindungsgemäße Vorrichtung löst das Problem der Bildung von Dioxinen und Furanen an Katalysatoren mit Übergangsmetallen, insbesondere Eisen und/oder Kupfer und/ oder Kobalt, gemäß Patentanspruch 1. Vorteilhafte Ausgestaltungen der Vorrichtung finden sich in den abhängigen Ansprüchen.

Ein Verfahren zur Herstellung der erfindungsgemäßen Vorrichtung ist in-Anspruch 18 gekennzeichnet.

Der Grundgedanke besteht darin, die Kohlenwasserstoffe, insbesondere aromatische, benzolhaltige, gegebenenfalls bereits chlorierte, die Dioxinvorläufersubstanzen darstellen, daran zu hindern, in Kontakt mit den PCDD bzw. PCDF bildenden Übergangsmetallen zu kommen, um so die Erzeugung von PCDDs und PCDFs zu vermeiden.

Hierfür wird stromauf des übergangsmetallhaltigen Katalysators, auf diesem, ein Molekularsieb z.B. als Schicht, angebracht bzw. aufgebracht. Die Poren des Molekularsiebs, durch die die Reaktanten aus der Gasströmung an die Katalysatoroberfläche diffundieren müssen, sind so ausgelegt, dass sie kleiner als der Moleküldurchmesser der kohlenwasserstoffhaltigen PCDD- und PCDF-Vorläufersubstanzen oder PCDD oder PCDF, aber größer als der Moleküldurchmesser von NO, NO₂, O₂ und NH₃ sind. Dadurch können die für die Reaktion am übergangsmetallhaltigen Katalysator, z.B. SCR- Katalysator, notwendigen Moleküle den stromab zum Molekularsieb und/oder unter dem Molekurarsieb liegenden übergangsmetallhaltigen Katalysator erreichen, während die für die Dioxinbildung verantwortlichen Kohlenwasserstoffe durch das Molekularsieb, auf Grund sterischer Hinderung, von dem übergangsmetallhaltigen Katalysator ferngehalten werden. Dies gelingt, dadurch, dass die für die Reaktionen am übergangshaltigen Katalysator, z.B. einem SCR-Katalysator relevanten Moleküle NO, NO₂, O₂ und NH₃ Durchmesser von 1,5Å - 3Å aufweisen, während diese für die aromatischen Kohlenwasserstoffe, Dioxine und Furane bei 12Å -26Å liegen, d.h. die Porendurchmesser des Molekularsiebs sind deshalb vorteilhaft zwischen 3Å und 12Å zu wählen.

Das Molekularsieb kann als Molekularsieb-Schicht direkt auf dem übergangsmetallhaltigen Katalysator angeordnet werden, so dass für die gewünschten geringen Schichtdicken in vorteilhafter Weise die notwendige Stabilität erreicht wird.

Die definierten Porendurchmesser des Molekularsiebs lassen sich relativ einfach durch die Verwendung von Zeolithen darstellen. Durch die gezielte Anordnung der AlO₄- und SiO₄-Tetraeder lassen sich unterschiedliche Gitterkonstanten sowie Strukturen und damit Porendurchmesser erzeugen.
Außerdem ist der Einsatz von Silikaten, Metallsilikaten, Aluminaten, Metallaluminaten, Silicophosphaten, Metallsilicophosphaten, Silicoaluminophosphaten, Aluminophosphaten, Metallaluminophosphaten und Aluminiumsilikaten als Molekularsieb vorteilhaft.

Für das Molekularsieb haben sich Gitterstrukturen vom Typ AEN, OSI, EPI, ERI, FER, FAU, OFF, MFI, LTL, VFI, MAZ, MEI, EMT, CHA, KFI, BEA, MFS, MEL, MTW, EUO, MTT, HEU, FER, TON und MOR als besonders vorteilhaft erwiesen. Die vorstehend genannten Bezeichnungen entsprechen der IZA-Nomenklatur, IZA steht dabei für International Zeolite Association.

Für die Ausführung der Molekularsiebe als Zeolith beinhalten diese Gitterstrukturen u. a. die Zeolith-Typen Mordenith, Epistilbit, Chabazit, Erionit, Mazzit, Ferrierit, Faujasit, Offretit, ZSM-5, ZSM-4, ZSM-5, ZSM-12, ZSM-18, ZSM-20, ZSM-22, ZSM-23, ZSM-34, ZSM-35, ZSM-38, ZSM-48, ZSM-50, Omega, Beta, Zeolith A, Zeolith L, Zeolith Y, Zeolith X, ZK-4, ZK-5, ZK-14, ZK-20, ZK-21 und ZK22. Die vorgenannten Zeolith-Typen können jeweils einzeln oder in beliebiger Kombination vorteilhaft als Molekularsiebmaterial eingesetzt werden.

Die mittlere Schichtdicke des Molekularsiebs bzw. der Molekularsieb-Schicht sollte dabei mindestens 3Å betragen. Da die für die SCR-Reaktion notwendigen Moleküle NO, NO₂, O₂ und NH₃ nun zuerst durch die Molekularsieb-Schicht diffundieren müssen, kann es, vor allem bei hohen Temperaturen, zu einer Limitierung der NOₓ-Umsätze auf Grund von Porendiffusion kommen. Um den Einfluss der Porendiffusion nicht unnötig zu erhöhen, sollte die mittlere Dicke des Molekularsiebs bzw. der Molekularsieb-Schicht daher 5µm nicht übersteigen. Demgegenüber liegt die Schichtdicke der Katalysatorschicht bei einem, durch Beschichtung oder Extrusion realisierten, Katalysator üblicherweise zwischen 5µm - 500 µm.

Zur Verbesserung der Umsätze am übergangsmetallhaltigen Katalysator ist es sinnvoll, die als Aktivkomponenten wirkenden Übergangsmetalle, z.B. Kupfer und/oder Eisen und/ oder Kobalt, ebenfalls in eine Zeolithmatrix, insbesondere vom Typ MFI und/oder BEA, zu integrieren. Dabei ist allerdings darauf zu achten, dass das Molekularsieb bzw. die Molekularsieb-Schicht keine PCDD bzw. PCDF erzeugenden Übergangsmetalle oder zumindest eine geringere Menge solcher Komponenten als der übergangsmetallhaltige Katalysator aufweist. Bei einer Kombination eines SCR-Katalysators mit einer Molekularsieb-Schicht kann, da Kupfer eine höhere PCDD- Bildungsrate als Eisen aufweist, eine kupferhaltige Katalysator- und eine eisenhaltige Molekularsieb-Schicht kombiniert werden.

Die Herstellung von zeolithhaltigen Katalysatoren wird in DE 3912596C2, EP 0311066 und EP 003486 beschrieben und damit dem Fachmann bekannt.

Der Zeolithtyp des Katalysators und des Molekularsiebs bzw. der Molekularsieb-Schicht können je nach Anwendungsfall gleich oder unterschiedlich sein.

Die Katalysatoren können durch Extrusion oder durch Beschichtung eines keramischen oder metallischen Trägers hergestellt werden. Durch die Extrusion ergeben sich üblicherweise wabenförmige Katalysatoren mit parallelen Strömungskanälen (DE 22 22 468 C2), während sich die Form und die Ausrichtung der Strömungskanäle bei der Verwendung von metallischen Katalysatorträgem weitestgehend frei wählen lässt.

Nach der Trocknung und/oder Kalzinierung der Katalysatoren wird in einem weiteren Arbeitsschritt die Molekularsieb-Schicht ausgebildet. Hierfür stehen zwei unterschiedliche Verfahren zur Auswahl:
Zum einen ist das Aufbringen einer Molekularsieb-Schicht, ähnlich der Beschichtung von Substraten mit Katalysatorwashcoat, möglich. Anschließend muss diese Schicht, analog zu den Katalysatoren, getrocknet und kalziniert werden, um eine stabile und feste Verbindung zwischen der Molekularsieb-Schicht und dem Katalysator sicherstellen zu können. Werden für die Molekularsieb-Schicht Zeolithe eingesetzt, bietet sich die Beschichtung mit Hilfe einer zeolithhaltigen Suspension an. Die mittlere Dicke einer derart aufgebrachten Schicht liegt üblicherweise im Bereich von 0,5µm - 5µm.

Die Molekularsieb-Schicht kann zusätzlich Aktivkomponenten, die eine Oxidation von Kohlenwasserstoffen und/oder PCDD und/oder PCDF ermöglichen, enthalten. Dazu zählen unter anderem Elemente der Platinmetallgruppe, Wolfram, Titan, Lanthan, Molybdän, Cer oder Mangan. Bei Einbindung der Elemente in eine Zeolithstruktur erhöhen sich auf Grund der hohen Dampfdrücke innerhalb der Porenstruktur die Sublimationstemperaturen erheblich, so dass bis zu 750°C selbst der Einsatz von Vanadium innerhalb der Molekularsieb-Schicht möglich wird.

Eine weitere Möglichkeit zur Ausbildung der Molekularsieb-Schicht besteht, vor allem bei der Verwendung von zeolithhaltigen SCR- Katalysatoren, darin, die Konzentration mindestens eines Übergangsmetalls an der Katalysatoroberfläche durch Ionenaustausch gegen ein anderes Ion, das keine oder nur eine geringe PCDD- oder PCDF-Bildungsaktivität besitzt, zu substituieren. Im einfachsten Fall gelingt dies durch Einbringen eines aciden Fluids. Dadurch werden die Übergangsmetallionen in der Zeolithstruktur durch Protonen aus dem sauren Fluid ersetzt.

Da wasserstoffhaltige Zeolithe wenig stabil sind, sollten anschließend die Protonen gegen Metallkationen mit geringer PCDD- bzw. PCDF- Bildungsaktivität und/oder Kohlenwasserstoffoxidationsaktiviät ausgetauscht werden. Wie bereits oben beschrieben, bieten sich hierfür Elemente der Platinmetallgruppe, Wolfram, Titan, Lanthan, Molybdän, Cer, Mangan oder Vanadium an. Zudem sind ebenfalls nichtmetallische Kationen einsetzbar. Je nach Affinität dieser Elemente kann auf den Zwischenschritt der Protonierung verzichtet werden und durch Wahl eines geeigneten pH-Werts die Übergangsmetalle direkt ausgetauscht werden. Durch Ionenaustausch hergestellte Molekularsieb-Schichten können extrem dünn ausgeführt werden, so dass deren mittlere Schichtdicke üblicherweise zwischen 3Å und 1 µm liegt.

Als weitere Möglichkeit zur Reduzierung des Bauraums bietet es sich an, Partikelfilter mit übergangsmetallhaltigem Katalysatormaterial zu beschichten und anschließend mit einer Molekularsieb-Schicht, beispielsweise durch Imprägnieren, Ionnenaustausch oder Beschichten, zu versehen. Dabei ist allerdings zu beachten, dass auch nach der Beschichtung noch freie Strömungskanäle innerhalb des Partikelfilters zur Verfügung sehen müssen, um einen unnötig hohen Abgasgegendruck zu vermeiden. Daher sollte die Abgasströmung innerhalb der Filterstruktur an den Molekularsiebporen vorbei- und nicht durch diese hindurchströmen, so dass die Reaktanden nur, analog zu den oben beschriebnen Vorgängen an Katalysatorsubstraten, über Diffusionsvorgänge in die Molekularsiebporen eindringen und so die darunter liegende Katalysatorschicht erreichen. Dies kann beispielsweise durch eine hohe Porosität der Katalysatorschicht erreicht werden. Erzeugt werden kann eine solche hohe Porosität beispielsweise durch die Beimischung von Füllstoffen zum Washcoat, die sich bei der Kalzinierung verflüchtigen oder durch die Beimischung von zeolithfreien Washcoatzusätzen hoher Porosität oder die Beimischung von Zeolithtypen hoher Porosität und/oder großer Porendurchmesser erzielen. Eine weitere Möglichkeit besteht bei hochporösem Filtersubstrat darin, eine dünne und das Filtersubstrat nicht komplett abdeckende bzw. verschließende Beschichtung des Filtermaterials mit dem übergangshaltigen Katalysatormaterial vorzunehmen, so dass innerhalb des Filtersubstrats noch genügend freie Strömungskanäle vorhanden bleiben. Bei der anschließenden Ausbildung der Molekularsiebschicht ist darauf zu achten, dass diese nicht die freien Strömungskanäle verschließt, sondern nur als dünne Schicht auf den frei zugänglichen Oberflächen der übergangsmetallhaltigen Katalysatorschicht liegt. In vorteilhafter Weise gelingt dies bei zeolithhaltigen Katalysatoren durch den, bereits oben beschriebenen, Ionenaustausch an der Oberfläche des Katalysators. Wie ebenfalls bereits ausgeführt, ist darauf zu achten, dass der Porendurchmesser des Molekularsiebs so gewählt sind, dass die großen kohlenwasserstoffhaltigen PCDD- und PCDF- Vorläufersubstanzen die Molekularsiebschicht nicht passieren können, während dies für die kleineren und unschädlichen Abgasbestandteile wie Sauerstoff, Stickstoff, Kohlendioxid, Stickoxide, Wasser, Ammoniak und Kohlenmonoxid möglich ist. Gelingt die Erzeugung der Molekularsieb-Schicht auf dem übergangsmetallhaltigen Katalysator nicht durch reinen Ionenaustausch, so ist eine separate Beschichtung des Katalysators mit Molekularsiebmaterial vorzunehmen.

Der Partikelfilter, auf dem die übergangsmetallhaltige Katalysatorschicht mit der auf dieser angeordneten Molekularsieb-Schicht angeordnet ist, kann vorteilhaft aus Sintermetall und/oder Keramik und/oder Filterschaum und/oder Keramikfasern und/oder Quarzfasern und/oder Glasfasern und/oder Siliziumcarbid und/oder Aluminiumtitanat bestehen.

Die vorstehend beschriebene Lösung, stellt eine besonders kostengünstige, bauraumsparende und damit vorteilhafte Möglichkeit dar, die Molekularsiebschicht und die übergansmatallhaltige Katalysatorschicht, z.B. SCR-aktive Katalysatorschicht, auf einem Katalysatorsubstrat und/oder auf einem Partikelfilter dauerhaft zu kombinieren, so dass sie nicht zerstörungsfrei voneinander getrennt werden können.

Es besteht natürlich auch die Möglichkeit, das Molekularsieb und den übergangsmetallhaltigen Katalysator, z.B. SCR- Katalysator, auf zwei getrennten Bauteilen anzubringen, wobei das komplette Abgas durch die Poren des Molekularsiebs geleitet wird, was allerdings einen deutlich höheren Abgasgegendruck, als dies bei der oben beschriebenen Lösungen der Fall ist, zur Folge hat. Bei der getrennten Anordnung des Molekularsiebs stromauf zum übergangsmetallhaltigen Katalysator ist darauf zu achten, dass das Abgas frei von festen Partikeln, wie z. B. Ruß ist, da es ansonsten zum Verstopfen der Molekularsiebporen kommt. Dies wird beispielsweise durch die Anordnung des Molekularsiebs stromab eines Partikelfilters und stromauf zum übergangsmetallhaltigen Katalysator, z. B. SCR-Katalysator erreicht. Bei einer solchen Anordnung lässt sich das Molekularsieb auch in vorteilhafter Weise mit dem Partikelfilter kombinieren, indem das Molekularsieb als Schicht auf der Abströmseite des Partikelfilters aufgebracht wird, so dass das Molekularsieb und der Partikelfilter eine nicht zerstörungsfrei zu trennende Einheit bilden. In diesem Fall ist die Beschichtung so vorzunehmen, dass die Poren des Partikelfilters auf seiner Abströmseite vollständig durch das Molekularsieb verschlossen sind, so dass das Abgas durch die Poren des Molekularsiebs strömen muss. Allerdings ist es hierfür, speziell bei hohen Kohlewasserstoffkonzentrationen im Abgas, meist notwendig, dass das Molekularsieb eine Kohlenwasserstoffoxidationsaktivität besitzt, da es ansonsten zu einem Verstopfen der Molekulasiebporen durch unverbrannte Kohlenwasserstoffe kommt. Als Aktivkomponenten kommen, wie bereits oben beschrieben, Elemente der Platinmetallgruppe, Wolfram, Titan, Lanthan, Molybdän, Cer oder Mangan in Frage.

Obwohl in der vorangegangenen Beschreibung zum Teil auf Katalysatoren zur selektiven katalytischen Reduktion (SCR-Katalysatoren) abgehoben wurde, ist zu betonen, dass sich die vorstehend beschriebenen Vorgehensweisen bei allen übergangsmetallhaltigen Katalysatoren einsetzen lassen, bei denen eine PCDD- und/oder PCDF-Bildung beobachtet wird.

## Patentansprüche

1. Vorrichtung zur Verminderung der Bildung von polychlorierten Dibenzo-Dioxinen und polychlorierten Dibenzo-Furanen an wenigstens einem übergangsmetallhaltigen Katalysator, der in der Abgasableitung einer Brennkraftmaschine verbaut ist, wobei
- zwischen dem Abgas und dem wenigstens einen übergangsmetallhaltigen Katalysator stromauf zu diesem wenigstens ein Molekularsieb, das Kohlenwasserstoffe vom übergangsmetallhaltigen Katalysator zurückhält, angeordnet ist, derart,
- dass auf dem übergangsmetallhaltigen Katalysator ein Molekularsieb als Schicht aufgebracht ist, wobei die Poren des Molekularsiebs, durch die die Reaktanten aus der Gasströmung an die Katalysatoroberfläche diffundieren müssen, mit dem Durchmesser ihrer freien Durchgänge zwischen 3Å und 12Å gewählt sind, derart, dass sie kleiner als der Moleküldurchmesser der kohlenwasserstoffhaltigen PCDD- und PCDF-Vorläufersubstanzen oder PCDD oder PCDF, aber größer als der Moleküldurchmesser von NO, NO₂, O₂ und NH₃ sind, so dass die für die Reaktion am übergangsmetallhaltigen Katalysator notwendigen Moleküle den unter dem Molekurarsieb liegenden übergangsmetallhaltigen Katalysator erreichen, während die für die Dioxinbildung verantwortlichen Kohlenwasserstoffe durch das Molekularsieb, auf Grund sterischer Hinderung, von dem übergangsmetallhaltigen Katalysator ferngehalten werden und wobei das Molekularsieb keine oder nur geringe PCDD- oder PCDF-Bildungsaktivität besitzt.

2. Vorrichtung nach dem Anspruch 1, **dadurch gekennzeichnet, dass** es sich bei dem Übergangsmetall um Kupfer und/oder Eisen und/oder Kobalt handelt.

3. Vorrichtung nach einem der vorangegangenen Ansprüche, **dadurch gekennzeichnet, dass** es sich bei dem wenigstens einen Katalysator um einen Katalysator zur selektiven katalytischen Reduktion von Stickoxiden im Abgas einer Brennkraftmaschine mit Hilfe von Ammoniak und/ oder ammoniakabspaltenden Reduktionsmitteln handelt.

4. Vorrichtung nach einem der vorangegangenen Ansprüche, **dadurch gekennzeichnet, dass** die Übergangsmetalle des Katalysators in eine Zeolithstruktur eingebettet sind.

5. Vorrichtung nach Anspruch 6, **dadurch gekennzeichnet, dass** das Zeolith vom Typ MFI und/oder BEA ist.

6. Vorrichtung nach einem der vorangegangenen Ansprüche, **dadurch gekennzeichnet, dass** das Molekularsieb mit Hilfe von Zeolithen und/oder Silikaten und/oder Metallsilikaten und/oder Aluminaten und/oder Metallaluminaten und/oder Silicophosphaten und/oder Metallsilicophosphaten und/oder Silicoaluminophosphaten und/oder Aluminophosphaten und/oder Metallaluminophosphaten und/oder Aluminiumsilikaten hergestellt ist.

7. Vorrichtung nach einem der vorangegangenen Ansprüche, **dadurch gekennzeichnet, dass** das Molekularsieb Gitterstrukturen vom Typ AEN und/oder OSI und/oder EPI und/oder ERI und/oder FER und/oder FAU und/oder OFF und/oder MFI und/oder LTL und/oder VFI und/oder MAZ und/oder MEI und/oder EMT und/oder CHA und/oder KFI und/oder BEA und/oder MFS und/oder MEL und/oder MTW und/oder EUO und/oder MTT und/oder HEU und/oder FER und/oder TON und/oder MOR aufweist.

8. Vorrichtung nach einem der vorangegangenen Ansprüche, **dadurch gekennzeichnet, dass** das Molekularsieb aus Zeolithen vom Typ Mordenith und/oder Epistilbit und/oder Chabazit und/oder Erionit und/oder Mazzit und/oder Ferrierit und/oder Faujasit und/oder Offretit und/oder ZSM-3 und/oder ZSM-4 und/oder ZSM-5 und/oder ZSM-12 und/oder ZSM-18 und/oder ZSM-20 und/oder ZSM-22 und/oder ZSM-23 und/oder ZSM-34 und/oder ZSM-35 und/oder ZSM-38 und/oder ZSM-48 und/oder ZSM-50 und/oder Omega und/oder Beta und/oder Zeolith A und/oder Zeolith L und/oder Zeolith Y und/oder Zeolith X und/oder ZK-4 und/oder ZK-5 und/oder ZK-14 und/oder ZK-20 und/oder ZK-21 und/oder ZK22 einzeln oder in beliebiger Kombination besteht.

9. Vorrichtung nach einem der vorangegangenen Ansprüche, **dadurch gekennzeichnet, dass** die Konzentration wenigstens eines Übergangsmetalls in der Molekularsieb-Schicht niedriger ist als im übergangsmetallhaltigen Katalysator.

10. Vorrichtung nach einem der vorangegangenen Ansprüche, **dadurch gekennzeichnet, dass** im übergangsmetallhaltigen Katalysator die Konzentration von Kupfer höher ist als in der Molekularsieb-Schicht und/ oder dass in der Molekularsieb-Schicht die Konzentration von Eisen höher ist, als im übergangsmetallhaltigen Katalysator.

11. Vorrichtung nach einem der vorangegangenen Ansprüche, **dadurch gekennzeichnet, dass** der übergangsmetallhaltige Katalysator und die Molekularsieb-Schicht miteinander verbunden sind und nicht zerstörungsfrei von einander getrennt werden können.

12. Vorrichtung nach einem der vorangegangenen Ansprüche, **dadurch gekennzeichnet, dass** das Molekularsieb Mittel zur Oxidation von Kohlenwasserstoffen aufweist.

13. Vorrichtung nach einem der vorangegangenen Ansprüche, **dadurch gekennzeichnet, dass** in dem Molekularsieb Elemente der Platinmetallgruppe und/ oder Wolfram und/ oder Titan und/ oder Lanthan und/ oder Molybdän und/ oder Cer und/ oder Mangan und/ oder Vanadium enthalten sind.

14. Vorrichtung nach einem der vorangegangenen Ansprüche, **dadurch gekennzeichnet, dass** der übergangsmetallhaltige Katalysator mit der darauf angeordneten Molekularsieb-Schicht auf einem Partikelfilter angeordnet ist.

15. Vorrichtung nach einem der vorangegangenen Ansprüche, **dadurch gekennzeichnet, dass** der übergangsmetallhaltige Katalysator mit der darauf angeordneten Molekularsieb-Schicht stromab eines Partikelfilters angeordnet ist.

16. Vorrichtung nach einem der vorangegangenen Ansprüche, **dadurch gekennzeichnet, dass** der Partikelfilter aus Metall und/oder Sintermetall und/oder Keramik und/oder Schaum und/oder Keramikfasern und/oder Quarzfasern und/oder Glasfasern und/oder Siliziumcarbid und/oder Aluminiumtitanat besteht.

17. Vorrichtung nach einem der vorangegangenen Ansprüche, **dadurch gekennzeichnet, dass** die mittlere Dicke des Molekularsiebs und der Molekularsieb-Schicht mindestens 3Å höchstens aber 5µm beträgt.

18. Verfahren zur Herstellung einer Vorrichtung nach Anspruch 1, **dadurch gekennzeichnet, dass** der übergangsmetallhaltige Katalysator durch Extrusion eines übergangsmetallausgetauschten Zeolithmaterials oder durch Beschichtung eines, insbesondere keramischen oder metallischen, Trägers mit einem übergangsmetallausgetauschten Zeolithmateral hergestellt wird, und die Konzentration wenigstens eines Übergangsmetalls an der zeolithhaltigen Katalysatoroberfläche durch Ionenaustausch gegen ein anderes Metall, dass keine oder nur eine geringe PCDD- oder PCDF-Bildungsaktivität besitzt, oder gegen nichtmetallische Kationen, insbesondere Protonen, ausgetauscht ist, derart, dass sich an der Katalysatoroberfläche eine Molekularsieb-Schicht ausbildet.

## Claims

1. A device for reducing the formation of polychlorinated dibenzodioxins and polychlorinated dibenzofurans at at least one transition metal-containing catalyst which is installed in the exhaust pipe of an internal combustion engine, wherein
- at least one molecular sieve which keeps hydrocarbons away from the transition metal-containing catalyst is arranged between the exhaust and the at least one transition metal-containing catalyst upstream from the latter, such
- that a molecular sieve is applied as a layer on the transition metal-containing catalyst, the pores of the molecular sieve through which the reactants have to diffuse out of the gas flow onto the catalyst surface being selected with the diameter of their free passages between 3Å and 12Å, such that they are smaller than the molecular diameter of the hydrocarbon-containing PCDD and PCDF precursor substances or PCDD or PCDF, but larger than the molecular diameter of NO, NO₂, O₂ and NH₃, so that the molecules necessary for the reaction on the transition metal-containing catalyst reach the transition metal-containing catalyst lying beneath the molecular sieve, while the hydrocarbons responsible for the dioxin formation are kept away from the transition metal-containing catalyst by the molecular sieve, due to steric hindering, and the molecular sieve having no or only low PCDD or PCDF formation activity.

2. A device according to Claim 1, **characterised in that** the transition metal is copper and/or iron and/or cobalt.

3. A device according to one of the preceding claims, **characterised in that** the at least one catalyst is a catalyst for the selective catalytic reduction of nitrogen oxides in the exhaust of an internal combustion engine with the aid of ammonia and/or reducing agents which split off ammonia.

4. A device according to one of the preceding claims, **characterised in that** the transition metals of the catalyst are embedded in a zeolite structure.

5. A device according to Claim 6, **characterised in that** the zeolite is of the type MFI and/or BEA.

6. A device according to one of the preceding claims, **characterised in that** the molecular sieve is produced with the aid of zeolites and/or silicates and/or metal silicates and/or aluminates and/or metal aluminates and/or silicophosphates and/or metal silicophosphates and/or silicoaluminophosphates and/or aluminophosphates and/or metal aluminophosphates and/or aluminium silicates.

7. A device according to one of the preceding claims, **characterised in that** the molecular sieve has lattice structures of the type AEN and/or OSI and/or EPI and/or ERI and/or FER and/or FAU and/or OFF and/or MFI and/or LTL and/or VFI and/or MAZ and/or MEI and/or EMT and/or CHA and/or KFI and/or BEA and/or MFS and/or MEL and/or MTW and/or EUO and/or MTT and/or HEU and/or FER and/or TON and/or MOR.

8. A device according to one of the preceding claims, **characterised in that** the molecular sieve consists of zeolites of the type mordenite and/or epistilbite and/or chabazite and/or erionite and/or mazzite and/or ferrierite and/or faujasite and/or offretite and/or ZSM-3 and/or ZSM-4 and/or ZSM-5 and/or ZSM-12 and/or ZSM-18 and/or ZSM-20 and/or ZSM-22 and/or ZSM-23 and/or ZSM-34 and/or ZSM-35 and/or ZSM-38 and/or ZSM-48 and/or ZSM-50 and/or omega and/or beta and/or zeolite A and/or zeolite L and/or zeolite Y and/or zeolite X and/or ZK-4 and/or ZK-5 and/or ZK-14 and/or ZK-20 and/or ZK-21 and/or ZK-22 individually or in any combination whatsoever.

9. A device according to one of the preceding claims, **characterised in that** the concentration of at least one transition metal in the molecular-sieve layer is lower than in the transition metal-containing catalyst.

10. A device according to one of the preceding claims, **characterised in that** the concentration of copper in the transition metal-containing catalyst is higher than in the molecular-sieve layer and/or **in that** the concentration of iron in the molecular-sieve layer is higher than in the transition metal-containing catalyst.

11. A device according to one of the preceding claims, **characterised in that** the transition metal-containing catalyst and the molecular-sieve layer are joined together and cannot be separated from one another in non-destructive manner.

12. A device according to one of the preceding claims, **characterised in that** the molecular sieve has means for oxidation of hydrocarbons.

13. A device according to one of the preceding claims, **characterised in that** elements of the platinum metal group and/or tungsten and/or titanium and/or lanthanum and/or molybdenum and/or cerium and/or manganese and/or vanadium are contained in the molecular sieve.

14. A device according to one of the preceding claims, **characterised in that** the transition metal-containing catalyst with the molecular-sieve layer arranged thereon is arranged on a particle filter.

15. A device according to one of the preceding claims, **characterised in that** the transition metal-containing catalyst with the molecular-sieve layer arranged thereon is arranged downstream from a particle filter.

16. A device according to one of the preceding claims, **characterised in that** the particle filter consists of metal and/or sintered metal and/or ceramic and/or foam and/or ceramic fibres and/or quartz fibres and/or glass fibres and/or silicon carbide and/or aluminium titanate.

17. A device according to one of the preceding claims, **characterised in that** the average thickness of the molecular sieve and the molecular-sieve layer is at least 3 Å, but at most 5 µm.

18. A method for the production of a device according to Claim 1, **characterised in that** the transition metal-containing catalyst is produced by extrusion of a transition metal-exchanged zeolite material or by coating an in particular ceramic or metallic support with a transition metal-exchanged zeolite material, and the concentration of at least one transition metal on the zeolite-containing catalyst surface is exchanged by ion exchange for another metal which has no or only a low PCDD or PCDF formation activity, or for non-metallic cations, in particular protons, such that a molecular-sieve layer forms on the catalyst surface.

## Revendications

1. Procédé pour diminuer la formation de dibenzo-dioxines polychlorées et de dibenzo-furanes polychlorés sur au moins un catalyseur renfermant un métal de transition qui est utilisé dans la conduite des gaz d'échappement d'un moteur à combustion interne dans lequel :
- entre les gaz d'échappement et le ou les catalyseur(s) renfermant un métal de transition, en amont de celui-ci, il est prévu au moins un tamis moléculaire qui retient des hydrocarbures du catalyseur renfermant un métal de transition, de sorte que,
- sur le catalyseur renfermant un métal de transition, soit appliqué un tamis moléculaire sous la forme d'une couche, les pores de ce tamis moléculaire par lesquels les réactifs doivent diffuser de l'écoulement gazeux sur la surface du catalyseur, ayant des passages libres de diamètre choisi entre 3Å et 12Å, de façon à être inférieur au diamètre moléculaire des précurseurs de PCDD et PCDF renfermant des hydrocarbures ou des PCDD ou PCDF, mais supérieur au diamètre moléculaire de NO, NO₂, O₂ et NH₃ de sorte que les molécules nécessaires à la réaction sur le catalyseur renfermant un métal de transition atteignent ce catalyseur qui est situé sous le tamis moléculaire, alors que les hydrocarbures responsables de la formation de dioxines sont maintenus à distance du catalyseur renfermant un métal de transition par le tamis moléculaire pour cause d'empêchement stérique, ce tamis moléculaire ne présentant pas ou que très peu d'activité de formation de PCDD ou de PCDF.

2. Dispositif conforme la revendication 1,
**caractérisé en ce que**
le métal de transition est du cuivre et/ou du fer et/ou du cobalt.

3. Dispositif conforme à l'une des revendications précédentes,
**caractérisé en ce que**
le catalyseur est un catalyseur de réduction catalytique sélective des oxydes d'azote dans les gaz d'échappement d'un moteur à combustion interne à l'aide d'ammoniac et/ou d'agents réducteurs libérant de l'ammoniac.

4. Dispositif conforme à l'une des revendications précédentes,
**caractérisé en ce que**
les métaux de transition du catalyseur sont noyés dans une structure de zéolithe.

5. Dispositif conforme à la revendication 6,
**caractérisé en ce que**
la zéolithe est une zéolithe de type MFI et/ou BEA.

6. Dispositif conforme à l'une des revendications précédentes,
**caractérisé en ce que**
le tamis moléculaire est fabriqué à l'aide de zéolithes et/ou de silicates et/ou de silicates métalliques et/ou d'aluminates et/ou d'aluminates métalliques et/ou de silicophosphates et/ou de silicophosphates métalliques et/ou de silicoaluminophosphates et/ou d'aluminophosphates et/ou d'aluminophosphates métalliques et/ou de silicates d'aluminium.

7. Dispositif conforme à l'une des revendications précédentes,
**caractérisé en ce que**
le tamis moléculaire comporte des structures de réseau de type AEN et/ou OSI et/ou EPI et/ou ERI et/ou FER et/ou FAU et/ou OFF et/ou MFI et/ou LTL et/ou VFI et/ou MAZ et/ou MEI et/ou EMT et/ou CHA et/ou KFI et/ou BEA et/ou MFS et/ou MEL et/ou MTW et/ou EUO et/ou MTT et/ou HEU et/ou FER et/ou TON et/ou MOR.

8. Dispositif conforme à l'une des revendications précédentes,
**caractérisé en ce que**
le tamis moléculaire est constitué de zéolithes de type mordenithe et/ou epistilbite et/ou chabasite et/ou erionite et/ou mazzite et/ou ferrierite et/ou faujasite et/ou offretite et/ou ZSM-3 et/ou ZSM-4 et/ou ZSM-5 et/ou ZSM-12 et/ou ZSM-18 et/ou ZSM-20 et/ou ZSM-22 et/ou ZSM-23 et/u ZSM-34 et/ou ZSM-35 et/ou ZSM-38 et/ou ZSM-48 et/ou ZSM-50 et/ou oméga et/ou bêta et/ou zéolithe A et/ou zéolithe L et/ou zéolithe Y et/ou zéolithe X et/ou ZK-4 et/ou ZK-5 et/ou ZK-14 et/ou ZK-20 et/ ou ZK-21 et/ ou ZK-22, seules ou en combinaison quelconque.

9. Dispositif conforme à l'une des revendications précédentes,
**caractérisé en ce que**
la concentration en au moins un métal de transition dans la couche de tamis moléculaire, est inférieure à sa concentration dans le catalyseur renfermant un métal de transition.

10. Dispositif conforme à l'une des revendications précédentes,
**caractérisé en ce que**
dans le catalyseur renfermant un métal de transition, la concentration en cuivre est supérieure à la concentration en cuivre dans la couche de tamis moléculaire et/ou dans la couche de tamis moléculaire la concentration en fer, est supérieure à la concentration en fer dans le catalyseur renfermant un métal de transition.

11. Dispositif conforme à l'une des revendications précédentes,
**caractérisé en ce que**
le catalyseur renfermant un métal de transition et la couche de tamis moléculaire, sont reliés et ne peuvent pas être séparés sans être endommagés.

12. Dispositif conforme à l'une des revendications précédentes,
**caractérisé en ce que**
le tamis moléculaire renferme des moyens d'oxydation des hydrocarbures.

13. Dispositif conforme à l'une des revendications précédentes,
**caractérisé en ce que**
le tamis moléculaire renferme des éléments métalliques du groupe du platine et/ou du tungstène et/ ou du titane et/ou du lanthane et/ou du molybdène et/ou du cérium et/ou du manganèse et/ou du vanadium.

14. Dispositif conforme à l'une des revendications précédentes,
**caractérisé en ce que**
le catalyseur renfermant un métal de transition est disposé, avec la couche de tamis moléculaire située sur celui-ci, sur un filtre à particules.

15. Dispositif conforme à l'une des revendications précédentes,
**caractérisé en ce que**
le catalyseur renfermant un métal de transition avec la couche de tamis moléculaire située sur celui-ci, est disposé en aval d'un filtre à particules.

16. Dispositif conforme à l'une des revendications précédentes,
**caractérisé en ce que**
le filtre à particules est constitué de métal et/ou de métal fritté et/ou de céramique et/ou de mousse et/ou de fibres céramiques et/ou de fibres de quartz et/ou de fibres de verre et/ou de carbure de silicium et/ou de titanate d'aluminium.

17. Dispositif conforme à l'une des revendications précédentes,
**caractérisé en ce que**
l'épaisseur moyenne du tamis moléculaire et de la couche de tamis moléculaire est d'au moins 3Å, mais au plus de 5 µm.

18. Procédé d'obtention d'un dispositif conforme à la revendication 1,
**caractérisé en ce que**
la catalyseur renfermant un métal de transition est obtenu par extrusion d'un matériau à base de zéolithe substitué par un métal de transition ou par revêtement d'un support en particulier céramique ou métallique avec un matériau à base de zéolithe substitué par un métal de transition, et la concentration en au moins un métal de transition sur la surface du catalyseur renfermant une zéolithe est remplacée, par échange d'ions, par un autre métal ne possédant aucune activité de formation de PCDD ou de PCDF, ou qu'une faible activité de ce type, ou par des cations non métalliques, en particulier des protons, de façon à former une couche de tamis moléculaire sur la surface du catalyseur.
